# EUROPÄISCHE PATENTSCHRIFT

(11) **EP 0 492 421 B1**
(45) Veröffentlichungstag und Bekanntmachung des Hinweises auf die Patenterteilung: **18.02.1998**
(21) Anmeldenummer: 91121746.1
(22) Anmeldetag: 29.06.1989
(51) Int. Cl.: G11B 33/04

(54) **Plattenaufnahmeteil für Aufbewahrungskassetten für kreisförmige Informationsplatten**
Disc receiving part for holding cartridges for circular information discs
Partie de réception de disque pour cassettes d'emmagasinage pour disques d'information circulaire

(30) Priorität: 29.08.1988 DE 8810917 U; 22.06.1989 DE 3920485
(43) Veröffentlichungstag der Anmeldung: 01.07.1992
(62) Teilanmeldung aus: 89907718.4
(73) Patentinhaber: CARTONNERIES DE THULIN S.A., B-7350 Thulin (BE)
(72) Erfinder: Dunker, Petra, D-40883 Ratingen (DE)
(74) Vertreter: Stenger, Watzke & Ring Patentanwälte

(56) Entgegenhaltungen:
- DE-A- 3 414 903
- DE-A- 3 425 579

## Beschreibung

Die Erfindung betrifft ein Plattenaufnahmeteil für Aufbewahrungskassetten für kreisförmige Informationsplatten, insbesondere optisch auslesbare Videoplatten und digitale Schaltplatten, auch als CD bekannt, mit den Merkmalen des Oberbegriffs des Patentanspruchs 1.

Es ist bekannt, z. B. Compact Discs (CDs) in Aufbewahrungskassetten aufzubewahren und auch zu verkaufen, bei denen zwischen mindestens einem Bodenteil und ggf. einem Deckelteilein gattungsgemäßes Plattenaufnahmeteil angeordnet ist. Derartige Kassetten werden in Regalen oder ähnlichen Präsentations- bzw. Aufbewahrungsmöbeln untergebracht. In das Bodenteil ist in der Regel eine einseitig nutzbare Informationsschrift eingelegt, die an zwei gegenüberliegenden Kanten geknickt ist, so daß die abgeknickten Bereiche wie Buchrücken beschriftbar sind. Zu diesem Zweck sind die Bodenteile aus durchsichtigem Kunststoff hergestellt. Die Deckelteile nehmen eine mehrseitig nutzbare Informationsschrift oder auch ein sogenanntes Booklet auf. Diese bilden das Cover. Zu diesem Zweck besteht auch das Deckelteil aus durchsichtigem Kunststoff. Die CD wird bei diesen bekannten Aufbewahrungskassetten also nach dem Öffnen, d. h. Aufklappen von Boden- oder Deckelteil sichtbar. - Diese bekannten Aufbewahrungskassetten haben den Nachteil, relativ voluminös zu sein.

Aus der DE 33 01 644 A1 ist eine Aufbewahrungskassette für zwei oder mehr CDs bekannt, bei der ein einen Zwischenboden bildendes Mittelteil mit umlaufenden Stirnwänden zur Aufnahme von je einer CD auf jeder Seite des Zwischenbodens vorgesehen ist. Hierzu dienen jeweils eine erhöhte Auflage und eine mehrgliedrige Zapfenanordnung, die sich über die Auflage erhebt. Zur Befestigung der Auflage samt der Zapfenanordnung ist auf jeder Seite des Zwischenbodens eine kreisförmige Aussparung eingelassen. Diese Befestigungsart für die kreisförmige Informationsplatte ist arbeitsaufwendig und voluminös.

Aus der DE 34 14 903 A1 ist eine ähnliche Aufbewahrungskassette wie aus der zuvor beschriebenen DE 33 01 644 A1 bekannt, bei der das Mittelteil eine zentrische Durchbrechung aufweist, die beidseitig von mehreren Zapfen zum Festklemmen der kreisförmigen Informationsplatte am Rand deren Mittenausnehmung umgeben ist. Die beidseitig von dem Zwischenboden sich erhebenden Zapfen sind jeweils in ein und derselben Flucht angeordnet. Es wurde nun gefunden, daß dieser bekannte Zwischenboden nicht sicher genug gegen ein ungewolltes Sich-Lösen der kreisförmigen Informationsplatte sowie herstellungstechnisch aufwendig ist.

Davon ausgehend liegt der Erfindung die **Aufgabe** zugrunde, ein Plattenaufnahmeteil der eingangs genannten Art zu schaffen, die als funktionssichere Anordnung ausgebildet ist.

Zur **Lösung** dieser Aufgabe wird ein Plattenaufnahmeteil mit den Merkmalen des Anspruchs 1 vorgeschlagen.

Durch die Erfindung werden u. a. folgende Vorteile erreicht:
- Entformbarkeit ohne Seitenschieber oder ähnlichem im Spritzwerkzeug, also einfache und betriebssichere Auslegung der Spritzgießform;
- gut angepaßte Klemmkräfte.

Zweckmäßige Ausgestaltungen des Erfindungsgegenstandes sind in weiteren Ansprüchen enthalten.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform ein erfindungsgemäßes Plattenaufnahmeteil - beispielhaft - dargestellt ist. In der Zeichnung zeigen:
- Fig. 1: eine Aufbewahrungskassette im aufgeklappten Zustand in Seitenansicht mit einen erfindungsgemäßen Plattenaufnahmeteil;
- Fig. 2: von derselben Aufbewahrungskassette eine Draufsicht auf die obere Seite des Plattenaufnahmeteiles (Ansicht A gemäß Fig. 1) sowie
- Fig. 3: von dem Plattenaufnahmeteil eine Schnittdarstellung - entsprechend dem Schnitt entlang der Linie III-III gemäß Fig. 1 und 2.

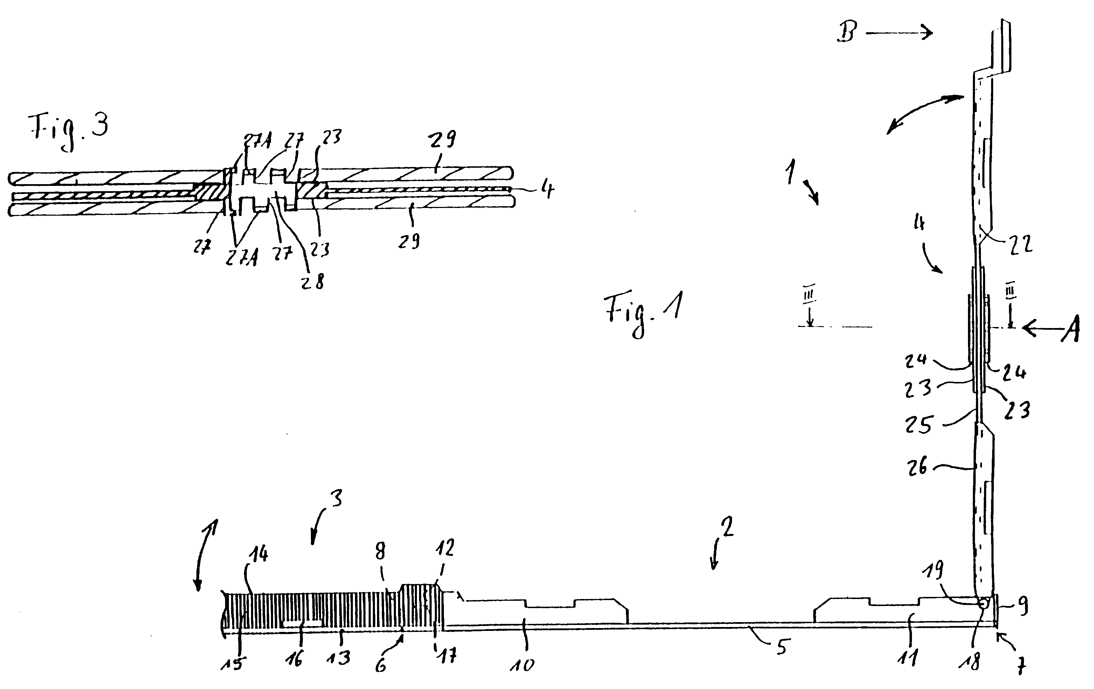

In Fig. 1 ist eine Aufbewahrungskassette insgesamt mit 1 bezeichnet, welche aus einem Bodenteil 2, einem Deckelteil 3 und einem Plattenaufnahmeteil 4 besteht.

Das Bodenteil 2 weist eine im Grundriß im wesentlichen rechteckförmige, nicht ganz quadratische Bodenplatte 5 auf, welche an den schmaleren Kanten 6 und 7 des Bodenteiles 2 einstückig mit Stirnwänden 8 und 9 verbunden ist. Zumindest in den Bereichen der Kanten 6 und 7 weist die Bodenplatte 5 entlang der Kanten der relativ längeren Seiten seitenwandbildende Flansche 10 und 11 auf. Nahe der in der Zeichnung links dargestellten Kante 6 des Bodenteiles 2 sind in den einander gegenüberliegenden Flanschen 10 (der zweite Flansch 10 ist von dem ersten Flansch 10 verdeckt) Bohrungen bzw. kreisförmige Ausnehmungen 12 vorgesehen, welche das bodenseitige Teil einer Scharniereinrichtung bilden.

Das Deckelteil 3 weist eine im Grundriß annähernd quadratische oder von der quadratischen Form leicht abweichende Deckelplatte 13 auf, die an zwei ihrer gegenüberliegenden Kanten einstückig mit Seitenwänden 14 verbunden ist bzw. (wie die Einzelteile des Bodenteiles) einstückig damit gebildet ist. In dem dargestellten Ausführungsbeispiel weisen die Seitenwände 14 Riffelungen 15 sowie Ausnehmungen 16 auf. Die Riffelungen 15 sind in erster Linie aus optischen Gründen vorgesehen. Die Ausnehmungen 16 sind an ihrer oberen Begrenzung auf der Rückseite (Innenseite) der Seitenwände 14 mit etwa halbkreisförmigen Stegen (nicht dargestellt) versehen, welche u. a. als Distanzhalter bei geschlossener Aufbewahrungskassette dienen und welche darüber hinaus zwischen sich und der Innenfläche der Bodenplatte 13 eine zwischen den Seitenwänden 14 seitlich einschiebbare Informationsschrift (nicht dargestellt) halten können. Im Bereich der in der Zeichnung rechten Kante des Deckelteiles 3, welche im wesentlichen mit der Kante 6 des Bodenteiles 2 zusammenfällt (im Grundriß gesehen), weisen die Seitenwände 14 des Deckelteiles 3 nach innen vorspringende Scharnierstifte 17 auf, deren Abmessungen denen der Bohrung 12 entsprechen und die in die Bohrungen 12 unter Ausbildung eines Scharniers eingreifen. Die Scharniere 12, 17 auf beiden (in der Zeichnung hintereinander liegenden) Seiten des Bodenteiles 2 und des Deckelteiles 3 bilden gemeinsam eine Scharniereinrichtung, mit welcher das Deckelteil bezüglich des Bodenteiles um einen Winkel von vorzugsweise etwa 180° schwenkbar ist.

Wenn das Plattenaufnahmeteil in das Bodenteil 2 völlig hineingeschwenkt ist, ist die Aufbewahrungskassette von einer herkömmlichen Aufbewahrungskassette für eine einzelne CD so gut wie nicht mehr zu unterscheiden.

Das Plattenaufnahmeteil 4 ist im Bereich seiner beiden Oberseiten in ähnlicher Weise gestaltet, wie die bekannten Plattenaufnahmeteile für eine einzelne CD, d. h. es ist eine etwa kreisringförmige Vertiefung 22 in die Oberfläche eingearbeitet und ein*) Tragring 23 für die CD im zentralen Bereich sowie ein mehrgliedriger Klemmring 24 sind vorgesehen. Der Klemmring 24 ist mit einem leichten Übermaß ausgestattet, so daß das zentrale Loch einer CD mit leichtem Druck über den Klemmring schiebbar ist und die CD dann von dem Klemmring in dieser Position klemmend gehalten wird. Die Unterseite 25 des Plattenaufnahmeteils 4 weist vorzugsweise ebenfalls eine kreisringförmige Vertiefung 26 zur schützenden Aufnahme einer CD sowie einen weiteren Tragring 25 und einen weiteren Klemmring 24 in der gleichen Art wie die entsprechenden Mittel auf der gegenüberliegenden (oberen) Seite des Plattenaufnahmeteils auf. Der Platz für die Vertiefung 26 wird durch eine entsprechend geringe Tiefe der Vertiefung 22 geschaffen.
*) gebräuchlich aber grundsätzlich auch verzichtbarer

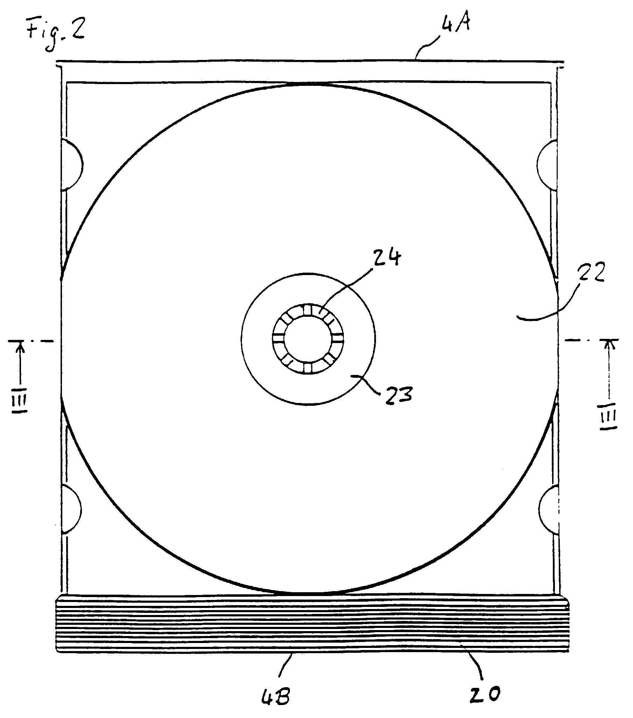

Das Plattenaufnahmeteil 4 ist vorzugsweise aus Kunststoff hergestellt. Zur Erzielung gut angepaßter Klemmkräfte für die zentrale Aufnahme von zwei CDs an gegenüberliegenden Seiten ist die in Fig. 3 schematisch dargestellte Anordnung, gemäß der im Querschnitt abgewinkelte Zungen 27 am Umfang einer zentralen Öffnung 28 des Plattenaufnahmeteils 4 derart wechselweise verteilt angeordnet sind, daß abwechselnd eine abgewinkelte Zunge nach oben und eine abgewinkelte Zunge nach unten ragt, wobei abgewinkelte Zungenenden 27A in die Öffnung 28 (in Draufsicht betrachtet) hineinragen. Eine derartige Zungenanordnung ist nicht nur sehr wirkungsvoll, sondern auch mit einfachen Spritzgießwerkzeugen ohne Formenschieber od. dgl. herstellbar. Gleichwohl können die an beiden Seiten des Plattenaufnahmeteils anzuordnenden CDs 29 gleich sicher gehalten werden. Auch ein häufiges Entnehmen und Zurücklegen der CDs ist problemlos möglich.

### Bezugszeichenliste:

- 1: Aufbewahrungskassette
- 2: Bodenteil
- 3: Deckelteil
- 4: Plattenaufnahmeteil
- 4A: Kante
- 4B: Kante
- 5: Bodenplatte
- 6: Kante
- 7: Kante
- 8: Stirnwand
- 9: Stirnwand
- 10: Flansch
- 11: Flansch
- 12: Bohrung
- 13: Deckelplatte
- 14: Stirnwände
- 15: Riffelung
- 16: Ausnehmung
- 17: Scharnierstifte
- 18: Bohrung
- 19: Scharnierstifte
- 20: Griffleiste
- 21: Eingriffmulde
- 22: Vertiefung
- 23: Tragring
- 24: Klemmring
- 25: Unterseite
- 26: Vertiefung
- 27: Zungen
- 27A: Zungenenden
- 28: Öffnungen
- 29: CD

- A: Ansicht
- B: Ansicht

## Patentansprüche

1. Plattenaufnahmeteil für eine aus einem Bodenteil (2), einem Deckelteil (3) und dem Plattenaufnahmeteil bestehende Aufbewahrungskassette für zwei kreisförmige Informationsplatten (29), bei dem am Umfang einer zentralen Öffnung (28) auf beiden Seiten von dem Plattenaufnahmeteil hervorstehende Klemmelemente zum Festklemmen je einer kreisförmigen Informationsplatte am Rand deren Mittenausnehmung vorgesehen sind,
**dadurch gekennzeichnet, daß**
die Klemmelemente (Zungen 28) um die zentrale Öffnung (28) derart wechselweise verteilt angeordnet sind, daß abwechselnd ein Klemmelement nach oben und ein Klemmelement nach unten ragt.

2. Plattenaufnahmeteil nach Anspruch 1, dadurch gekennzeichnet, daß die Klemmelemente abgewinkelt sind.

3. Plattenaufnahmeteil nach Anspruch 2, dadurch gekennzeichnet, daß die Klemmelemente in die Öffnung (28) hineinragen.

## Claims

1. Disc-receiving part for a storage case which comprises a base part (2), a cover part (3) and the disc-receiving part and is intended for two circular information discs (29), in which disc-receiving part there are provided, on the circumference of a central opening (28), clamping elements which project from the disc-receiving part on both sides and are intended for clamping in each case one circular information disc at the border of the central cutout thereof, characterized in that the clamping elements (tongues 27) are distributed in alternating fashion around the central opening (28) such that the clamping elements alternately project upwards and downwards.

2. Disc-receiving part according to Claim 1, characterized in that the clamping elements are angled off.

3. Disc-receiving part according to Claim 2, characterized in that the clamping elements project into the opening (28).

## Revendications

1. Partie de réception de disques pour un boîtier de rangement pour deux disques d'informations circulaires (29), composée par un fond (2), un couvercle (3) et la partie de réception de disques pour laquelle sont prévus des éléments de maintien sur le pourtour d'une ouverture centrale (28) sur les deux côtés de la partie de réception de disques, pour caler chacun des disques d'informations circulaires par le bord de leur trou central,
caractérisée en ce que,
les éléments de maintien (languettes 28) sont disposés autour de l'ouverture centrale (28) dans une répartition alternée telle que, à tour de rôle, un élément de maintien se dresse vers le haut, et un élément de maintien se dresse vers le bas.

2. Partie de réception de disques selon la revendication 1, caractérisée en ce que les éléments de maintien sont coudés.

3. Partie de réception de disques selon la revendication 2, caractérisée en ce que les éléments de maintien viennent dans l'ouverture (28).
